# EUROPEAN PATENT APPLICATION

(11) **EP 1 363 082 A1**
(43) Date of publication of application: **19.11.2003**
(21) Application number: 03010572.0
(22) Date of filing: 12.05.2003
(51) Int. Cl.: F24F 3/14, B01D 53/04, B01D 53/26

(54) **Refillable desiccant dehumidifier and refilling device for such desiccant dehumidifier**

(30) Priority: 15.05.2002 IT MI20020983
(71) Applicant: SALD s.a.s. di Stefano Pozzi & C., 20020 Solaro (MI) (IT)
(72) Inventor: Piuri, Paolo, 20020 Solaro (MI) (IT); Rattin, Manuela, 20123 Milano (IT); Pozzi, Stefano, 23032 Bormio (SO) (IT)
(74) Representative: Premru, Rok

(57) **Abstract**

This invention relates to a refillable desiccant dehumidifier (1) comprising
- a vessel (2) divided into an upper compartment (21) and a lower compartment (22) separated by water permeable means (17), said upper compartment (21) being adapted to contain a filler of hygroscopic material (3) in the form of loose salts and said lower compartment (22) being adapted to collect water dropped from said upper compartment (21), when the latter contains a hygroscopic refill (3);
- a cover (4), having an opening (7) for filling said upper compartment (21), there being provided, at the sides of said opening (7) a first pair of guides (8) having a free end and a second pair of guides (10) which extend over and parallel to said first pair of guides (8);
- a panel (9) for covering said opening (7), inserted in said first pair of guides (8), one end (91) whereof projects with respect to said vessel (2) and/or said cover (4);
- means (12) for locking said first panel (9), which means allow removal of said covering panel (9) as soon as a device for refilling said upper compartment (21) is inserted in said second pair of guides (10);
- said cover (4) and/or said panel (9) having at least a perforated portion (5a, 5b), to allow passage of air between the external environment and said upper compartment (21).

## Description

This invention relates to a refillable desiccant dehumidifier and a refilling device for a desiccant dehumidifier.

Typically, a desiccant dehumidifier comprises a container which has an upper compartment, containing a filler of hygroscopic material, and a lower compartment which is adapted to receive drops of the water collected in the hygroscopic refill after absorption of atmospheric moisture.

The container has apertures to allow ambient air to circulate in the compartment containing the hygroscopic filler.

The absorbed moisture progressively dissolves the hygroscopic material, until the whole filler is exhausted.

In refillable desiccant dehumidifying devices, water may be drained from the collecting container and the compartment containing the filler may be refilled with hygroscopic material.

Preferably, the hygroscopic filler consists of calcium chloride crystals (CaCl₂), which have a high hygroscopic capacities as well as a low cost.

In currently available refillable dehumidifiers, the refill is composed of hygroscopic salts in loose form or contained in air and water permeable sachets (usually made of non-woven fabric), or contained in rigid perforated cartridges, lined with an air and water permeable fabric (typically non-woven fabric).

Loose hygroscopic salts are available in packs which are meant to be opened to pour their content in the hygroscopic filler compartment.

Handling calcium chloride in the form of loose salts requires a certain attention, as calcium chloride is a slightly corrosive material and hence it is important to prevent the hygroscopic material from polluting the environment and from coming in direct contact with the skin during the refilling operation.

The refills contained in non-woven fabric bags or in perforated and lined rigid cartridges have the advantage of preventing any direct contact of hygroscopic salts with the skin; nevertheless, the fabric and the possible perforated wall reduce air circulation and decrease the dehumidifying capacity.

Moreover, during operation, fabric tends to get soaked with water, thereby further reducing air circulation through the hygroscopic filler.

This invention has the object of providing a solution to prior art problems and particularly of providing a refillable desiccant dehumidifier and a refilling device which avoids any risk of accidental contact with hygroscopic salts during recharging, in which the dehumidifier also has a high moisture removal capacity.

This purpose is achieved by a dehumidifier according to the wording of claim 1 and by a cartridge refill for said dehumidifier according to the wording of claim 9.

Further advantages may be obtained by the additional characteristics of the dependent claims.

A possible embodiment of the invention will be described below, by way of example, with reference to the accompanying drawings, in which:

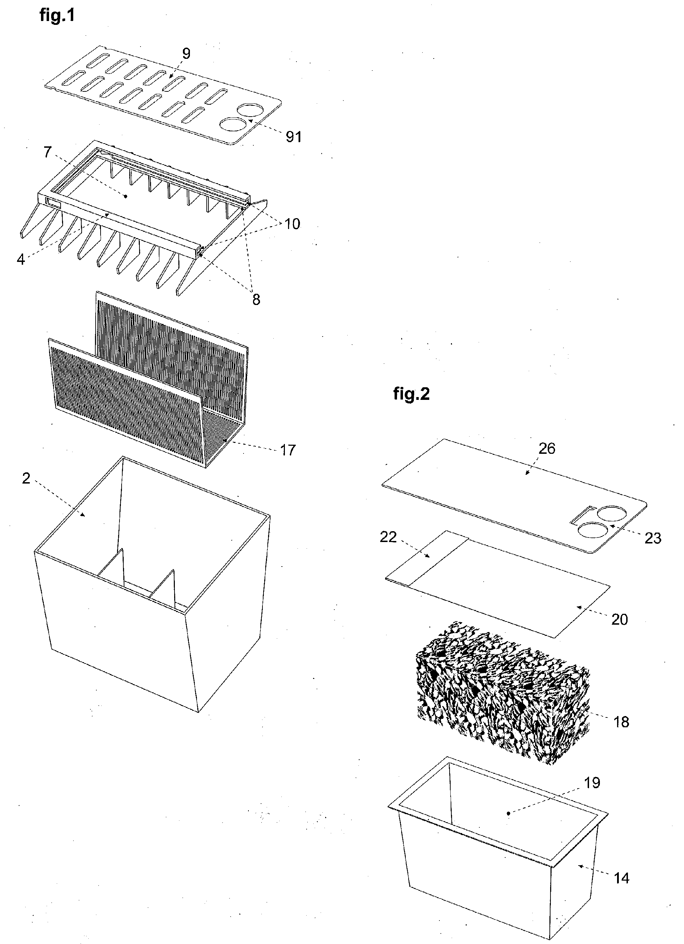

- Figure 1 is an exploded view of a dehumidifier according to the claims;
- Figure 2 is an exploded view of a refilling device according to the claims;
- Figures 3 to 7 are perspective views showing six successive sequences of the process of refilling a dehumidifier according to the claims by using a refilling device according to the claims;
- Figures 8 and 9 are sectional perspective views corresponding to Figures 4 and 5;
- Figure 10 is a perspective view of a detail of the dehumidifier according to the claims;

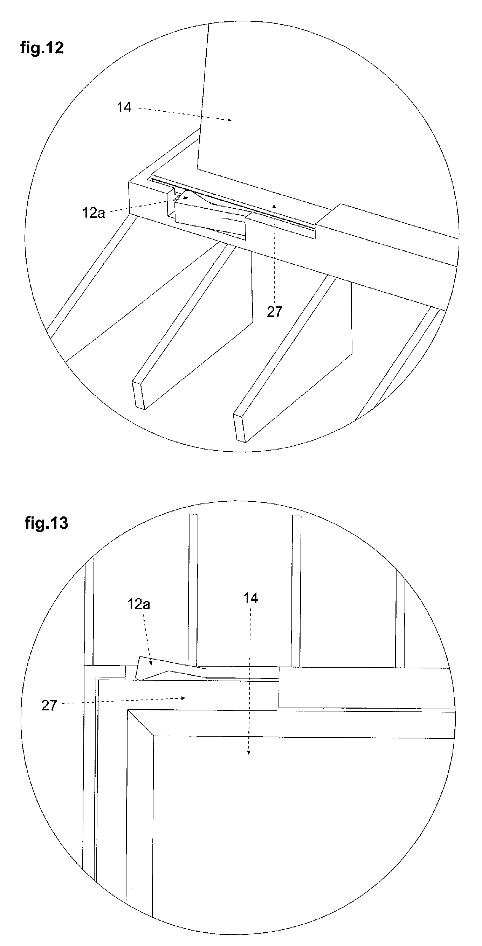

- Figures 11 is a top view of the detail as shown in Figure 10;
- Figure 12 is a perspective view of a detail of the dehumidifier according to the claims when it is used in combination with the refilling device according to the claims;
- Figure 13 is a top view of the detail as shown in Figure 12;
- Figure 14 is a perspective view of another detail of a dehumidifier according to the claims.

Referring to the accompanying figures, the reference numeral 1 generally denotes a refillable desiccant dehumidifier, which comprises a vessel 2 divided into an upper compartment 21 and a lower compartment 22, separated by water permeable means 17.

The upper compartment 21 is designed to contain a filler of hygroscopic material 3, in the form of loose salts, and the lower compartment 22 is designed to receive the dripping water resulting from atmospheric moisture adsorption in the hygroscopic filler 3.

The vessel 2 has a cover 4 at its top, having a central opening 7, for filling the upper compartment 21.

A first pair of guides 8, having a free end, as well as a second pair of guides 10, lying over and parallel to said first pair of guides 8, and also having a free end, are provided at the sides of the opening 7.

A panel 9 covering said opening is inserted in said first pair of guides 8, said panel 9 being so long as to have an end 91 projecting out of said vessel 2 and/or said cover 4, which is designed to be grasped to allow removal of the panel 9 during the refilling process.

Preferably, the projecting end 91 of the panel is shaped in such a manner as to allow insertion of at least one finger.

Means 12a, 12b are also provided for locking said first panel 9, which means allow removal of said covering panel 9 when a device for refilling said upper compartment 21 is inserted in said second pair of guides 10.

The cover 4 and/or the panel 9 have at least a perforated portion 5a, 5b to allow air circulation between the external environment and the upper compartment 21 that contains the hygroscopic filler 3.

In order to further improve air circulation through the upper compartment 21, at least one more perforated portion (not shown) may be provided in the upper portion of at least one of the side walls of said vessel 2.

In the embodiment that is shown in the Figures, the locking means 12a, 12b consist of a pair of elastic teeth 12a, which are situated in the proximity of the closed ends of said first and second guides 8, 10, which teeth can engage recesses 12b having a conjugate profile, formed at the side edges of the panel 9 when the latter is inserted in the first guides 8.

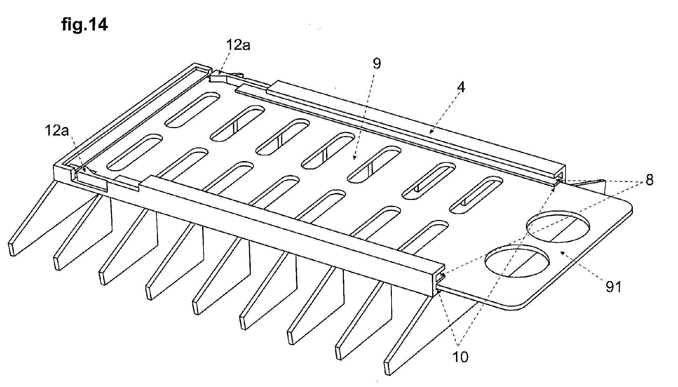

The elastic teeth 12a open apart when a refilling device is inserted in said second guides (see Figures 12 and 13).

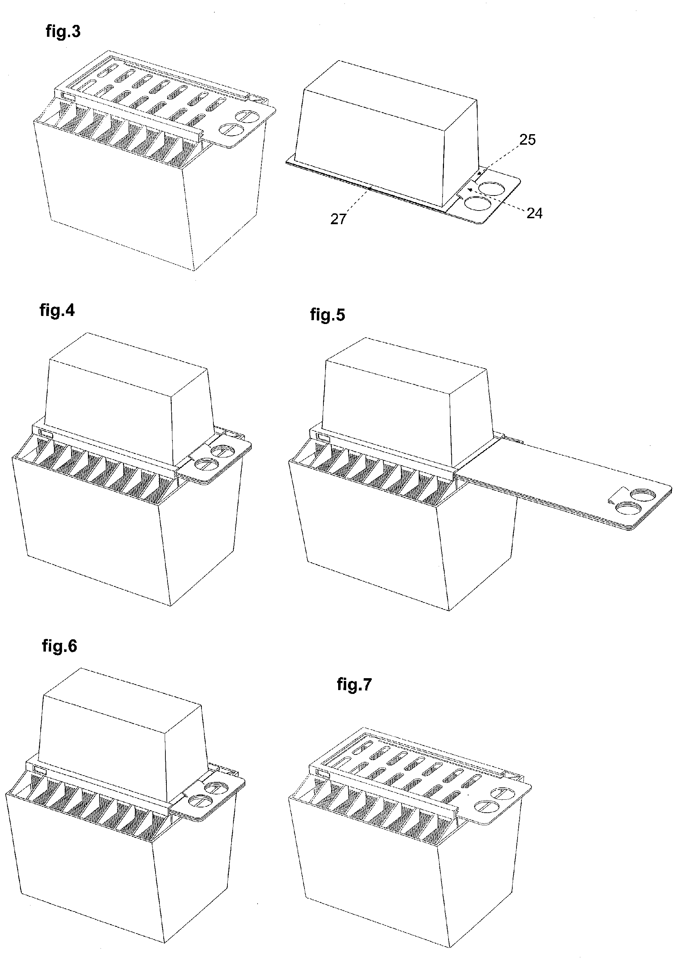

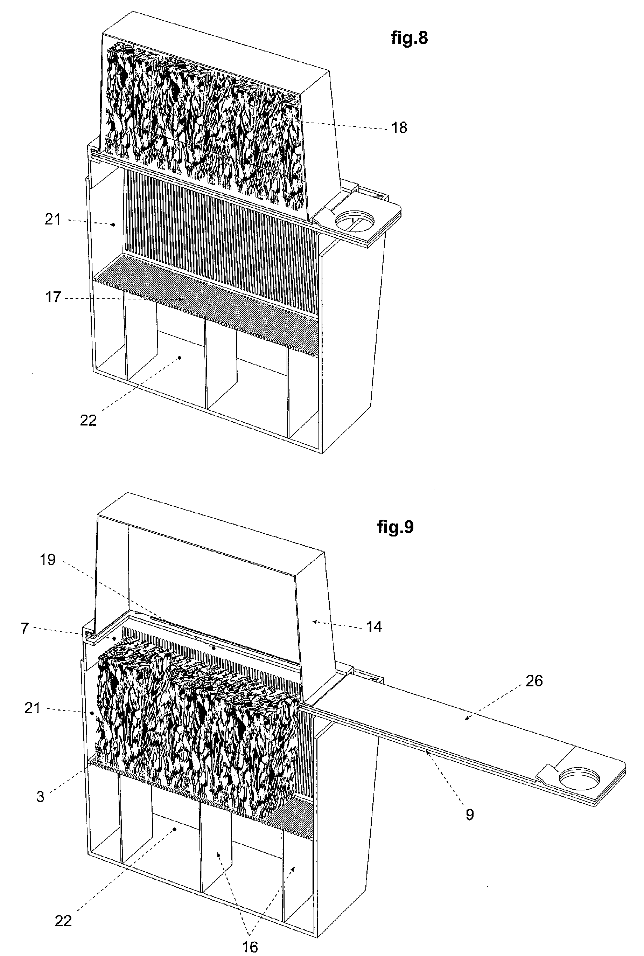

Preferably, the lower compartment 22 has a plurality of vertical fins 16 for supporting the water permeable means 17, which may consist of a grid or a wall having laminar perforations (see Figures 7 and 8).

In another embodiment, not shown, the water permeable means 17 are made of open-cell polyurethane foam.

The reference numeral 13 generally shows a refilling device 13 for a desiccant dehumidifier like the one described above.

Said device includes a hollow body 14 containing a filler 18 of bulk hygroscopic salts and having an opening 19 for feeding said filler 18.

A film material 20 is fitted onto said feed opening 19 to seal the filler 18.

A cover 26 is also provided, which is chemically or mechanically bonded to an end 22 of said sealing film 20, and which has a projecting end 23 to allow the manual grasp of the cover.

Preferably, the projecting end 23 of the cover 21 is shaped in such a manner as to allow insertion of at least one finger.

The cover 26 is removable in a direction substantially parallel to that of the sealing film 20, whereby the removal of the cover causes the sealing film 20 to be also removed starting from the end bonded to the cover 26.

Means 24, 25 are further provided to couple the cover 26 to the hollow body 14 at the end opposite to that in which said cover 26 is joined to said film 20.

Preferably, the means 24 for coupling the cover 26 to the hollow body 14 consist of an inclined tab 24 which engages a transverse projection 25 of said hollow body 14.

The hollow body 14 is arranged to be fitted in the second guides 10 of the dehumidifier in such a manner that the feed opening 19 is directed towards said panel 9.

According to the embodiment that is shown in the Figures, the hollow body 14 is coupled to the guides 10 of the dehumidifier by means of opposed longitudinal fins 27 placed at the feed opening 19.

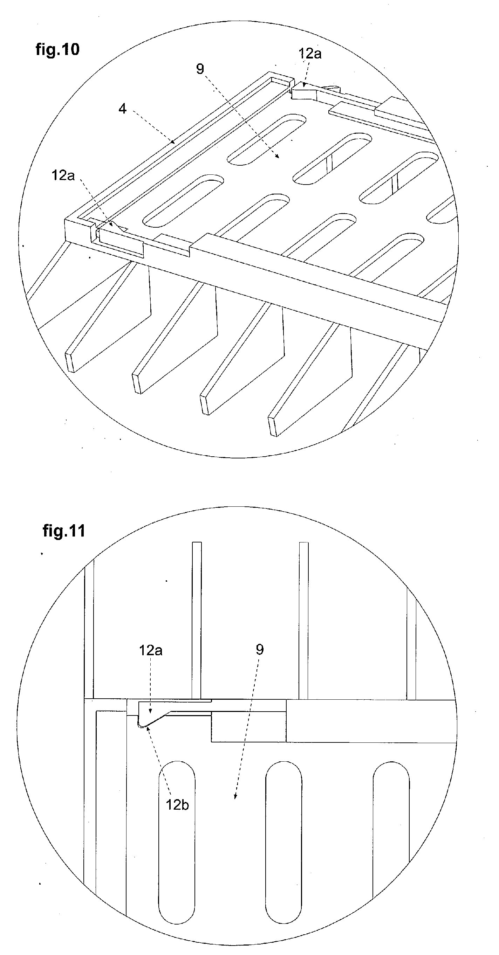

As is shown in Figures 3 to 10, in order to refill the dehumidifier, the refilling device must be first introduced in the guides 10 of the dehumidifier.

Only then, the panel 9 and the cover 26 may be simultaneously removed, to allow the hygroscopic filler to fall into the upper compartment 21.

Finally, the panel 9 may be closed again, and the refilling device may be extracted from the guides 10.

The dehumidifier as described hereinbefore prevents hygroscopic salts from being poured out during the recharging operation and also prevents any accidental contact with the hands of users.

## Claims

1. Refillable desiccant dehumidifier (1), comprising
- a vessel (2) divided into an upper compartment (21) and a lower compartment (22) separated by water permeable means (17), said upper compartment (21) being adapted to contain a filler of hygroscopic material (3) in the form of loose salts and said lower compartment (22) being adapted to collect water dropped from said upper compartment (21), when the latter contains a hygroscopic refill (3);
- a cover (4), having an opening (7) for filling said upper compartment (21), there being provided, at the sides of said opening (7) a first pair of guides (8) having a free end and a second pair of guides (10) which extend over and parallel to said first pair of guides (8);
- a panel (9) for covering said opening (7), inserted in said first pair of guides (8), one end (91) whereof projects with respect to said vessel (2) and/or said cover (4);
- means (12) for locking said first panel (9), which means allow removal of said covering panel (9) when a device for refilling said upper compartment (21) is inserted in said second pair of guides (10);
- said cover (4) and/or said panel (9) having at least a perforated portion (5a, 5b), to allow passage of air between the external environment and said upper compartment (21).

2. A dehumidifier as claimed in claim 1, wherein at least one of the walls of said vessel (2) has a perforated portion (5c) in said upper compartment (21).

3. A dehumidifier as claimed in claim 1 or 2, wherein said locking means (12) consist of a pair of elastic teeth (12a), which are situated in the proximity of the closed ends of said first guides (8) and second guides (10), which teeth can engage recesses (12b) having a conjugate profile, formed at the side end (13) of said panel (9), when said panel (9) is inserted in the first guides (8), said elastic teeth opening apart when a refilling device is inserted in said second guides (10).

4. A dehumidifier as claimed in claim 1 or 2 or 3, wherein said lower compartment (22) has a plurality of vertical fins (16) for supporting said water permeable means (17).

5. A dehumidifier as claimed in claim 1 or 2 or 3 or 4, wherein said water permeable means (17) consist of a grid.

6. A dehumidifier as claimed in claim 1 or 2 or 3, wherein said water permeable means (17) consist of a wall having laminar perforations.

7. A dehumidifier as claimed in claim 1 or 2 or 3, wherein said water permeable means (17) consist of open-cell polyurethane foam.

8. A dehumidifier as claimed in any preceding claim, wherein said projecting end (91) of said panel (9) is shaped in such a manner as to allow insertion of at least one finger.

9. A refilling device (13) for a desiccant dehumidifier, comprising
- a hollow body (14) containing a filler (18) of bulk hygroscopic salts and having an opening (19) for feeding said filler (18);
- a film material (20) fitted onto said feed opening (19) to seal said feed opening (19);
- a cover (26), which is chemically or mechanically bonded to an end (22) of said sealing film (20), said cover (26) having a projecting end (23) to allow the manual grasp of the cover and being removable in a direction substantially parallel to that of the sealing film (20), so as to remove the sealing film (20) starting from said end (22) of the film;
- said hollow body (14) being coupled to said second guides (10) of a dehumidifier as claimed in any claim 1 to 8 in such a manner that said feed opening (19) is directed toward said panel (9);

10. A device as claimed in claim 9, wherein said hollow body (14) is coupled to the parallel guides by means of opposed longitudinal fins (27) placed at the sides of the feed opening.

11. A device as claimed in claim 9 or 10, wherein means (24, 25) are further provided to couple said cover (26) to said hollow body (14) at the end opposite to that in which said cover (26) is joined to said film (20).

12. A device as claimed in claim 11, wherein said means (24) for coupling said cover (26) to said hollow body (14) consist of an inclined tab (24) which engages a projection (25) of said hollow body (14).

13. A device as claimed in any claim 9 to 12, wherein said projecting end (23) of said cover (26) is shaped in such a manner as to allow insertion of at least one finger.
